# EUROPEAN PATENT SPECIFICATION

(11) **EP 1 700 057 B1**
(45) Date of publication and mention of the grant of the patent: **04.09.2013**
(21) Application number: 03808430.7
(22) Date of filing: 02.12.2003
(51) Int. Cl.: F16K 11/074, F16K 37/00

(54) **MULTIPLE PORT VALVE**
MEHRWEGEVENTIL
CLAPET A MULTIPLES ORIFICES

(43) Date of publication of application: 13.09.2006
(73) Proprietor: Bradford, Lawrence J., Atlanta, GA 30339 (US); White, Rocky R., Lilburn, GA 30047 (US)
(72) Inventor: Bradford, Lawrence J., Atlanta, GA 30339 (US); White, Rocky R., Lilburn, GA 30047 (US)
(74) Representative: Hatzmann, Martin
(86) International application number: PCT/US2003/038323
(87) International publication number: WO 2005/066529

(56) References cited:
- GB-A- 114 005
- US-A- 282 313
- US-A- 1 044 479
- US-A- 2 974 681
- US-A- 3 207 180
- US-A- 3 207 180
- US-A- 3 405 734
- US-A- 3 405 734
- US-A- 3 640 310
- US-A- 5 316 042
- US-A- 6 098 646

## Description

### FIELD OF THE INVENTION

The invention relates in general to multiple port valves, and more particularly relates to multiple port valves for distributing air in an airlift system.

### BACKGROUND

A popular conventional method for moving fluids from one point to another through a conduit is through use of a pump; however, fluids may be transferred through conduits using other systems. For instance, fluids may be transferred through conduits using ambient air or other gases to push dense liquids through a conduit. One such system using ambient air to displace dense liquids through conduits is often referred to as an airlift system. In an airlift system, air is pumped into conduits filled with a dense liquid at certain locations in a system to force the dense fluids to move through the conduit to a desired endpoint. Many airlift systems involve distributing air to various parts of the systems at different times in varying amounts. Thus, a need exists for a device capable of reliably distributing air to multiple locations within an airlift system at different times.

Multiple port valves have been formed from a variety of configurations and used in many different applications for a variety of purposes. For instance, multiple port valves have included designs having a plurality of inlets coupled to a single outlet. On the other hand, some multiple port valves receive fluids from a single supply source and distribute the fluids to a plurality of different sources. For example, United Stated Patent Number 6,345, 645 to Kenna et al. discloses a multiple port valve for distributing water from a recirculating pump of a swimming pool to selected outlets for operating banks of cleaning heads in swimming pools. In addition, United States Patent Number 5,542, 451 to Foster discloses a multiple port valve for distributing water to a plurality of output ports in an aquarium. Furthermore, multiple port valves have been used in various industries, such as the petroleum industry, the healthcare industry, the residential pool industry, the water supply industry and various other industries. However, even with the application of multiple port valves across such a diverse collection of industries, there still exists a need for a reliable multiple port valve capable of distributing fluids, such as gases, to one of a plurality of destinations without leakage to other outlet ports.

US 3,405,734 discloses a self-draining valve having a valve body comprising an input member having an input through passage formed therein, an output member having a plurality of output through passages formed therein, one of said output passages being a drainage port. Said members being movably mounted relative to one another to selectively align said input passage with any of said output passages as required in use. Drainage passage means are formed in said body and adapted to communicate between each of said output passages which are not aligned with said input passage and said drainage port to provide drainage of the non-aligned output passages. This valve type suffers of its heavy and complex arrangement.

A similar valve is disclosed by GB 114,005, however also comprising the above drawbacks.

The same applies for US 3,207,180 disclosing a valve assembly comprising a body having a pressure fluid inlet port, an exhaust port and a cylindrical wall portion, said body being provided with at least one motor duct therein, three coaxial disc members within said body, adjustable means for maintaining said three 6cooxial disc members in face to face and fluid-tight engagement, the central disc member defining a disc valve rotatable relative to the two outermost disc members and providing with said cylindrical wall portion an annular space communicating with one of said ports, fluid passage defining means in one of said outermost disc members communicating with the other port and having at least a portion thereof extending axially of said one outermost disc member, at least one of said outermost disc members having at least one fluid passage radially spaced from said axial passage and communicating with said motor duct, and channel defining means in said disc valve, said channel defining means including at least two parallel longitudinal bores extending entirely through said disc valve so as to have one end constantly sealed by one of said outermost disc members and positioned to have the other end registering with said radially spaced passage in response to rotation of the disc valve, means defining a first substantially radial bore for establishing communication between one of said two longitudinal bores and said axial passage, and means defining a second substantially radial bore for establishing communication between the other longitudinal bore and the annular space.

### SUMMARY OF THE INVENTION

This invention is direct to multiple port valves capable of receiving fluids from one or more sources and distributing the fluids to one or more destinations through a plurality of outlet ports. The valves are capable of distributing fluids, such as, but not limited to: gases, such as ambient air, oxygen, and other gases, and liquids, such as distilled water, tap water and other liquids. The valves include a first valve body member and a second valve body member that form an internal cavity containing a rotational disk for controlling distribution of a fluid to one or more of the plurality of outlet ports. The first valve body member includes a distribution chamber for receiving a fluid from an inlet port.

In detail the valve comprises a valve body comprising a first valve body member coupled to a second valve body member to form an internal cavity, the first valve body member comprising a distribution chamber in fluid communication with an inlet port for receiving the fluid and for distributing the fluid to one of a plurality of outlet ports located in the second valve body member; and the second valve body member comprising a plurality of outlet ports; a rotational disk positioned in the internal cavity inside the valve body between the inlet port and the plurality of outlet ports for directing the fluid from the distribution chamber to an outlet port; an inner seal and an outer seal positioned between the rotational disk and the first valve body member for sealing the rotational disk to the first valve body member; and at least one outlet port seal positioned between the rotational disk and the second valve body member, wherein the rotational disk is rotatable by a drive shaft along its longitudinal axis, wherein the faces of the rotational disk have a smooth finish, and wherein the inner and outer seals and the at least one outlet port seal are positioned within recesses in the respective first valve body member and second valve body member, and wherein the recesses are sized so that the forces exerted on the inner and outer seals by one side of the rotational disk and the first valve body member are approximately equal to the forces exerted on the at least outlet port seal by the other side of the rotational disk and the second valve body member.

In one embodiment, the distribution chamber has a toroidal shape, but may have other shapes in other embodiments. The rotational disk includes one or more apertures sized to allow a fluid to pass from the distribution chamber formed by the rotational disk and the first valve body member to one or more of the outlet ports. In one embodiment, the rotational disk has a single aperture sized and positioned to align with a single outlet port.

The valves may also include a motor for rotating the rotational disk and aligning the one or more apertures in the rotational disk with one or more outlet ports selected from the plurality of outlet ports. The motor may be controlled manually or with an electric device, which may or may not be programmable, such as, but not limited to, a microcontroller or computer. The valves may include a gear box for reducing the rotational speed of the drive shaft of the motor and increasing the torque produced by the motor.

Seals are used for sealing the rotational disk to the first and second valve body members. Specifically, an inner seal and an outer seal are positioned between the first valve body member and the rotational disk to seal the distribution chamber to the rotational disk. The inner seal has an outside diameter that is slightly less than the inner diameter of the distribution chamber, and the outer seal has an inner diameter that is slightly larger than the outside diameter of the distribution chamber. This configuration prevents a fluid that entered the distribution chamber through the inlet port from exiting the distribution chamber except through the one or more apertures located in the rotational disk. In one embodiment, each outlet port is sealed individually to the rotational disk using individual outlet port seals. This configuration allows a fluid to be sent to an individual outlet port without allowing the fluid to be sent to the other outlet ports located in the second valve body member.

Such a configuration is ideally suited for use with an airlift system.

The first and second valve body members include recesses for keeping the seals located in the appropriate positions to maintain a predetermined amount of pressure loading on the rotating disk, and for reducing wear on the seals. The seals may have numerous designs; however, in one embodiment, the seals have a Y-shaped cross-section, which is rotated approximately 90 degrees from a conventional Y-shaped position. The recesses are sized so that the forces exerted on the inner and outer seals by one side of the rotational disk and the first valve body member are approximately equal to the forces exerted on the outlet port seals by the other side of the rotational disk and the second valve body member. This balancing of forces on the seals keeps the seals on one side of the rotational disk from undergoing premature wear relative to the seals on the other side, so as to provide maximum life of the seals and increase the efficiency of the valve.

Accordingly, it is an object of the present invention to provide an improved multiple port valve.

Another object of the present invention is to prepare a multiple port valve capable of distributing a fluid from one or more sources to one or more selected outlet ports chosen from a plurality of outlet ports without the fluid leaking to other outlet ports.

Still another object of the present invention is to provide a valve in which forces exerted on the seals located on opposite sides of a rotational disk are approximately balanced, which reduces wear of the seals and reduces the amount of torque required to rotate the rotational disk, and prevents premature breakage of the valve.

These and other objects and advantages of the present invention will become apparent after review of the following drawings and detailed description of the disclosed embodiments.

### BRIEF DESCRIPTION OF THE DRAWINGS

Figure 1 is an exploded perspective view of a valve according to a preferred embodiment of the present invention.
Figure 2 is a perspective view, with a partial-cut away section, of the valve shown in Figure 1.

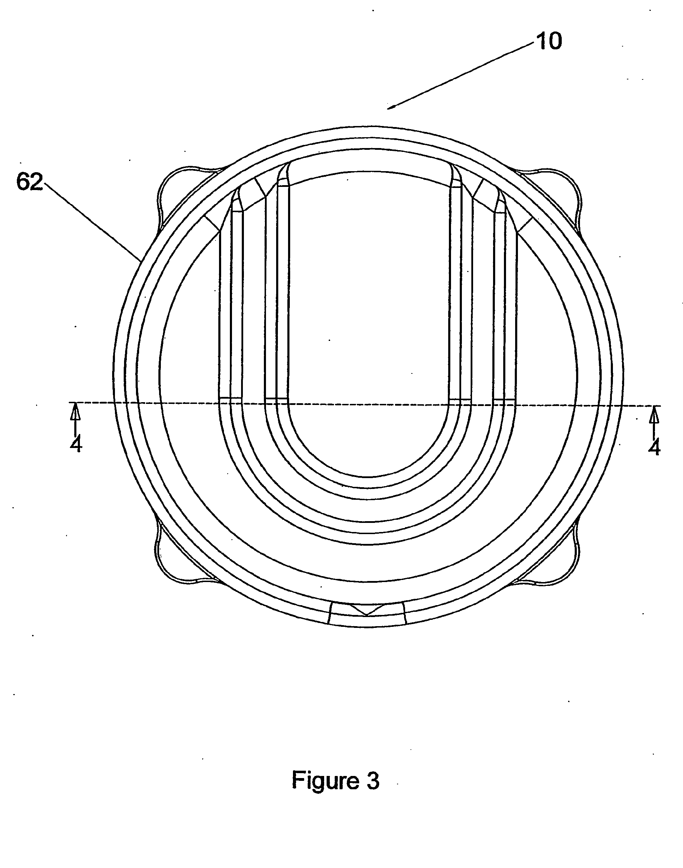

Figure 3 is a top view of the valve shown in Figure 1.
Figure 4 is a cross-section of the valve shown in Figure 1 taken at reference line 4-4 of Figure 3.
Figure 5 is a perspective view of a rotational disk usable in the valve shown in Figure 1.
Figure 6 is a perspective view of a second valve body member used to form a portion of the valve of Figure 1.
Figure 7 is a enlarged detail of a cross-section of one embodiment of seals used in the valve embodiment shown in Figure 6.

### DETAILED DESCRIPTION OF PREFERRED EMBODIMENT

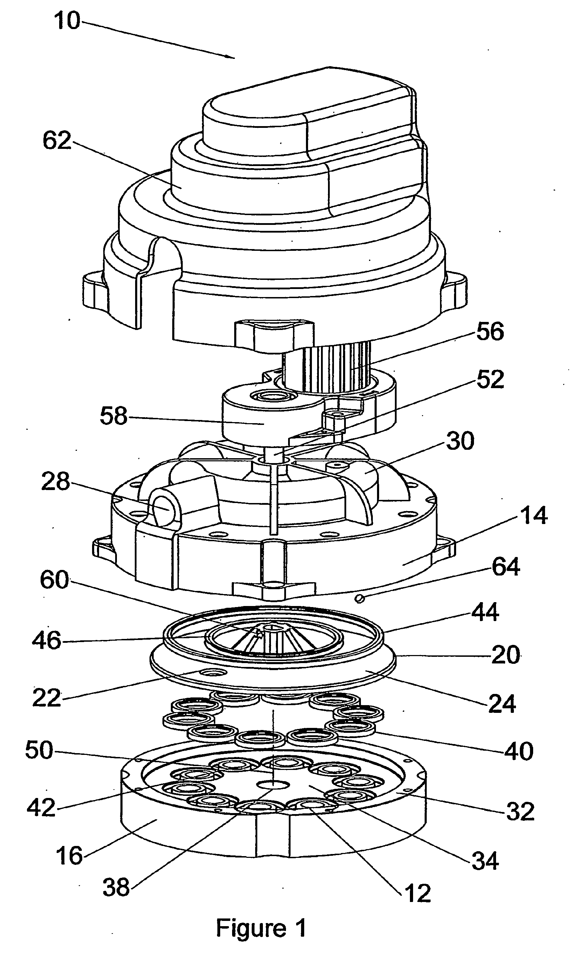

Figure 1 depicts a valve 10 according to one embodiment of this invention. The valve 10 is sometimes referred to as a multiple port valve and is used for receiving fluids from one or more sources and distributing the fluids through one or more outlet ports 12. Valve 10 may be used to transfer various fluids, such as, but not limited to, gases such as ambient air, oxygen, nitrogen, and other gases; and liquids, such as distilled water, tap water, and other fluids.

The valve 10 is composed of a first valve body member 14 and a second valve body member 16, which couple together to form the valve housing and an internal cavity 18 within the valve housing. Internal cavity 18 is sized to contain and position a rotational disk 20 for directing a fluid to one or more outlet ports 12 chosen from a plurality of outlet ports. Rotational disk 20 includes one or more apertures 22 radially spaced from the axis of rotation of the disk and sized to allow a fluid to p ass from a top surface 24 of the rotational disk to a bottom surface 26 of the rotational disk. In this configuration, valve 10 is capable of receiving a fluid through inlet port 28 and directing the fluid to one or more outlet ports 12 by positioning aperture 22 of rotational disk 20 proximate to a selected outlet port. Rotational disk 20 prevents a fluid from flowing from inlet port 28 to one or more outlet ports 12 without passing through aperture 22. Thus, rotational disk 20 controls through which outlet port 12 a fluid flows.

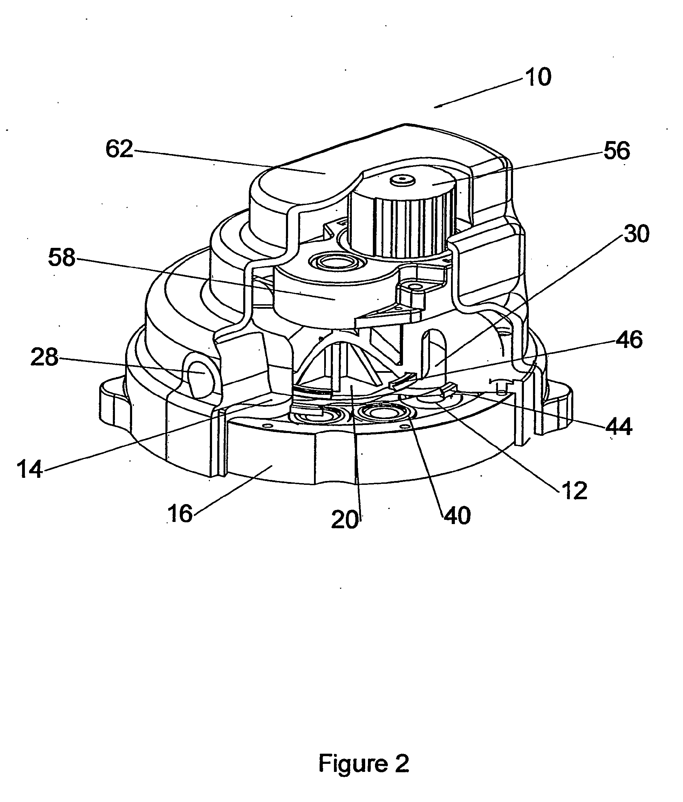

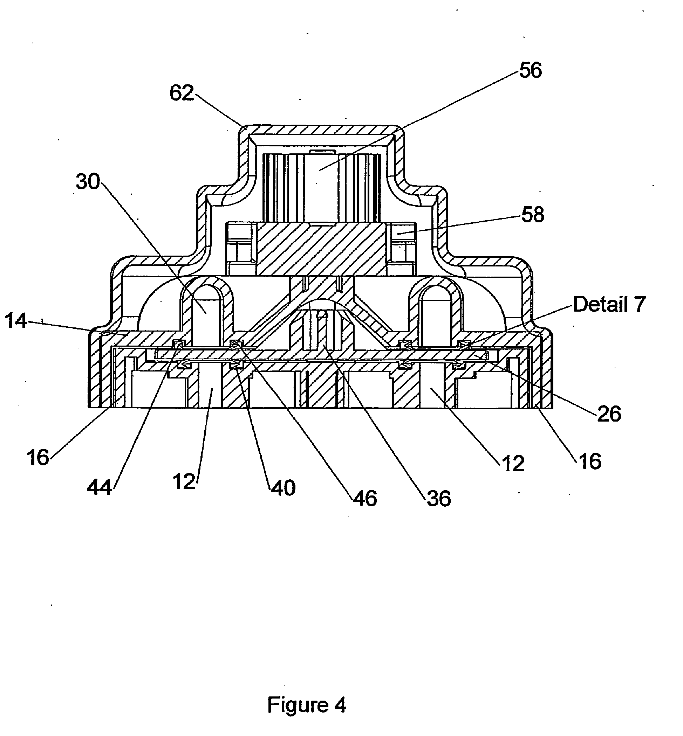

The first valve body member 14 includes an annular distribution chamber 3 0 within the internal cavity 18, as shown in Figures 2 and 4, for receiving a fluid from one or more inlet ports 28. Although Figure 1 shows first valve body member 14 as having a single inlet port 28 communicating with the distribution chamber, the invention is not limited to this configuration. Rather, the first valve body member 14 may have one or more inlet ports 28 in fluid communication with distribution chamber 30.

Distribution chamber 30 may take the form of various configurations or shapes. In one embodiment, distribution chamber 30 is generally toroidal shaped in se ction, as shown in Figures 1 a nd 4. However, the distribution chamber is not limited to this shape, but may have a rectangular, square, polygonal, or other shape. The shape of the distribution chamber 30 is a function of the diameter and radial position of aperture 22 on the rotational disk 20. Specifically, the distribution chamber 30 should be shaped so that the width of the distribution chamber is in fluid communication with the aperture 22 as the rotational disk 20 rotates relative to the distribution chamber. Because the disclosed embodiment of the valve is intended for distributing a volume of air at a rate of flow suitable for operating an airlift system as will be understood by those skilled in the art, the volume of the distribution chamber 30 should be sufficient to maintain that flow of air through the valve. Accordingly, the volume of the distribution chamber 30 preferably should be sufficient to buffer incoming fluid flow through the inlet port 28 and to maintain a substantially constant rate of flow through the valve 10 with little or no pressure drop or reduction in rate of fluid flow resulting from the presence of the valve.

The height of the distribution chamber 30 in the disclosed embodiment affects the maximum flow rate and corresponding pressure drop through the valve 10. Increasing the height of the distribution chamber increases the flow rate and reduces pressure drop within the valve, and vice versa. For an air valve intended for use in a system including one or more air lifts as discussed above, it is preferred to configure the distribution chamber so that the flow and air pressure are substantially unaffected by the presence of the valve 10 in the system.

The first valve body member 14 is configured to be coupled to the second valve body member 16 to form the internal cavity 18, as shown in Figure 4. First valve body m ember 14 a nd se cond valve body member 1 6 may be coupled together in numerous manners. In one embodiment, first valve body member 14 is coupled to second valve body member 16 using screws. However, the first and second valve body members may be coupled together with devices, such as, but not limited to, clamps, adhesives, snap-in retaining elements molded into the body members, and other connection devices.

A ledge surface 32 (Figure 1) is formed around the periphery of the second valve body member 16. The ledge surface extends upwardly, as viewed in that figure, from the upper side of the second valve body member 16 to fit within a corresponding recess formed in the facing lower side of the first valve body member 14, as best seen in Figures 1 and 4. The height of the ledge surface 32 of the second valve body member determines the amount of force exerted by the rotational disk 20, the first valve body member 14 and the second valve body member 16 on outer seal 44, inner seal 46, and outlet port seals 40. If the height of the ledge surface 32 is increased relative to the interior surface 34 of the second valve member 16, the spacing between the seals and the rotational disk 24 increases and the amount of force exerted on the seals by the rotational disk thus decreases, and vice versa.

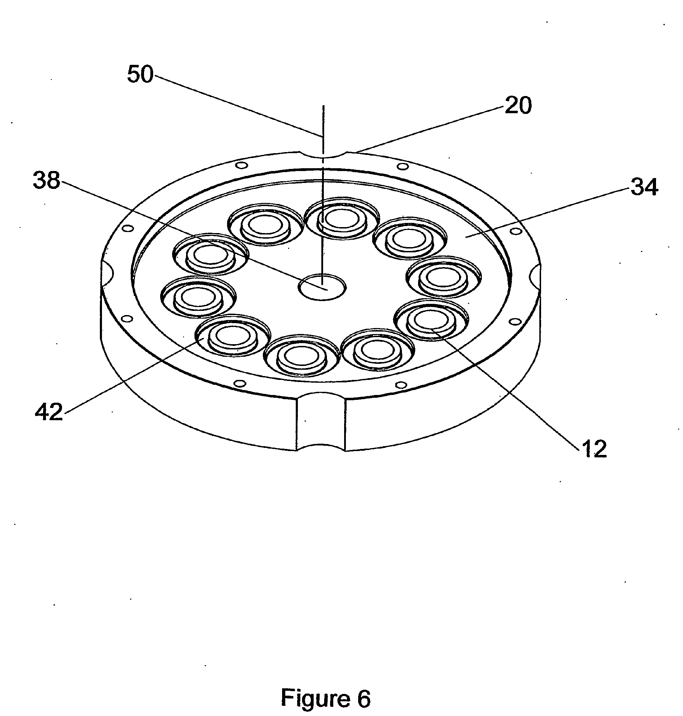

The second valve body member 16 includes a plurality of outlet ports 12, which are ten in number in the disclosed embodiment, as shown in Figure 6, although it should be understood that a greater or lesser number of outlet ports may be provided as required by a particular application. The outlet ports 12 extend through second valve body member 16 from an interior surface 34 to an exterior surface 36. Outlet ports 12 may be positioned in second valve body member 16 in numerous configurations. The limiting factor for positioning the outlet p orts 12 i n second valve body m ember 16 is that the outlet ports be located for fluid communication with the one or more apertures 22 of the rotational disk 20 as the disk is turned on its axis of rotation. In the disclosed embodiment, the second valve body member 16 includes ten outlet ports 12 positioned equidistant from a point on the second valve body member in the center of axial hole 38, Figure 6, with which the rotational disk is axially aligned, so that the outlet ports are disposed on an annular path on the second valve body member.

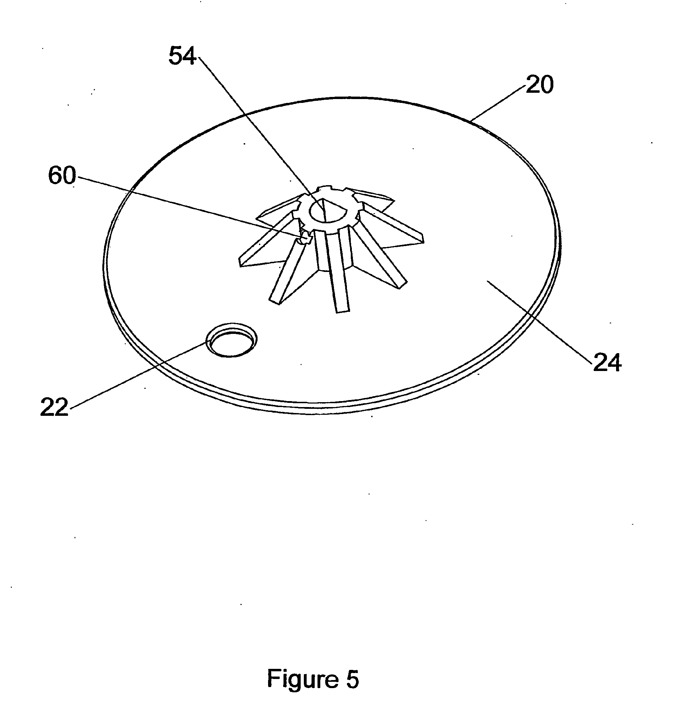

The rotational disk 20 is positioned in an internal cavity 18 formed between first valve body member 14 and second valve body member 16, as shown in Figure 4, and is capable of being rotated about a longitudinal axis 50. The rotational disk 20 may have an integral shaft or may be coupled to a drive shaft 52 engaging a central aperture 54 of the rotational disk. Rotational disk 20, as shown in Figures 1 and 5, includes at least one aperture 2 2 for allowing a fluid to pass from distribution chamber 30 to outlet ports 12. In one embodiment, rotational disk 20 includes a single aperture 22 radially positioned to align sequentially with the outlet ports 12 as the rotational disk is rotated. However, other embodiments may include two or more apertures 22, shaped and positioned to align concurrently with two or more selected outlet ports 12, thereby directing fluid flow concurrently to two or more outlet apertures at each rotational position of the disk. The rotational disk 20 thus controls the flow of fluids from distribution chamber 30 to one or more outlet ports. Specifically, the rotational disk 20 may be rotated by the drive shaft 52 along longitudinal axis 50 until the aperture 22 is positioned proximate to a selected outlet port 12 through which a fluid is intended to be sent. The faces of the rotational disk have a smooth finish to reduce frictional drag and consequent wear on the seals.

The rotational disk 12 may be rotated in this manner by a variety of techniques, such as but not limited to, manual, mechanical, or other such methods. In the disclosed embodiment, a motor 56, as shown in Figure 1, is coupled to drive shaft 52 for rotating the rotational disk 20 and aligning the aperture 22 with a selected outlet port 12. Motor 56 may be, but is not limited to, an electric stepper motor or the like. Electric stepper motor 56 is coupled to the rotational disk 20 through a gear box 58 for reducing the rotational speed of the drive shaft 52 and increasing the torque applied to that drive shaft, so that a smaller motor may be used than if gear box 58 were not used. The motor 56 may be protected using a cover 62 sized to fit over motor 56 and attach to first valve body member 14.

A sensor 70, shown in Figure 1, may be included in housing 60 of valve 10 for sensing the position of aperture 22 and positioning that aperture proximate to one of the plurality of outlet ports 12. The sensor 70 preferably is mounted in fixed position relative to the first valve body member 14 or the second valve body member 16, and may be any sensor capable of sensing the rotational position of the disk or the position of the aperture 22. In the disclosed embodiment, sensor 70 is a Hall-effect sensor disposed within the first valve body member to detect a magnetic sensing element 60, Figures 1 and 5, located on and moving with rotation of the rotational disk 20.

The valve 10 further includes seals, as shown in Figures 1, 2, and 4, for sealing the distribution chamber 30 to the rotational disk 20 and for sealing the rotational disk relative to the outlet ports 12. Valve 10 also includes an outlet port seal 40 positioned proximate to each outlet port 12 for providing a fluid-tight seal between the bottom surface 26 of the rotational disk 20 and each individual outlet port. In this configuration, a fluid is able to pass through aperture 22 and into a selected outlet port 12 without leaking and entering another outlet port. Thus, a fluid is sent from the inlet port 28 to a single outlet port 12, selected by the rotational position of the rotational disk 20 without the fluid entering another outlet port 12. In one embodiment, outlet port seals 40 may have a circular shape. However, other embodiments of valve 10 may include seals having other shapes and configurations. Second valve body member 16 may also include recesses 42 for receiving outlet port seals 40. Recesses 42 may be positioned around outlet ports 12 for keeping outlet port seals 40 positioned properly around the outlet ports. Recesses 42 may be any shape and may take the shape of the exterior shape of outlet port seals 40. In the disclosed embodiment, recesses 42 are circular in shape.

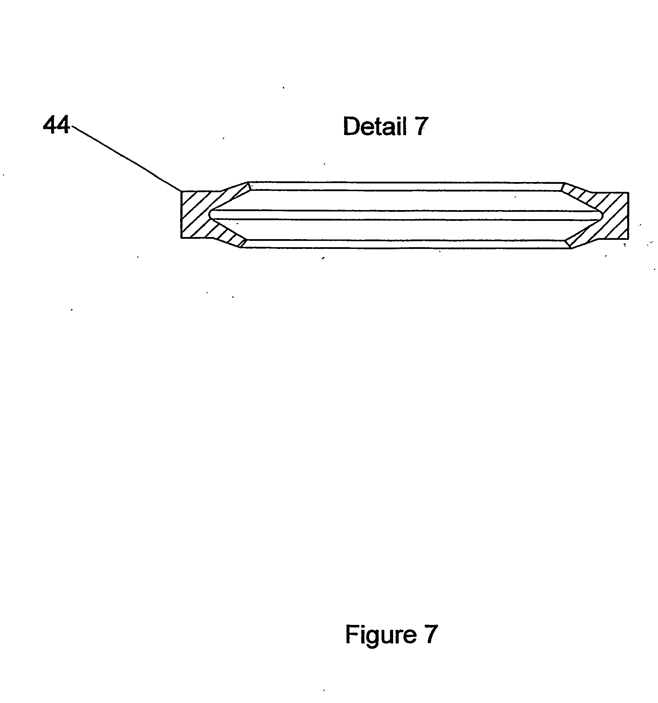

The valve 10 also includes seals positioned between rotational disk 20 and first valve body member 14 for sealing distribution chamber 30 to rotational disk 20. In the disclosed embodiment, an outer seal 44 and an inner seal 46 are positioned between first valve body member 14 and rotational disk 20. Outer seal 44 is preferably sized to have an inside diameter slightly larger than the outer diameter of distribution chamber 30, and inner seal 46 is sized to have an outside diameter slightly less than the inside diameter of the distribution chamber. First valve body member 14 includes recesses 48 for receiving inner seal 46 and outer seal 44 and securing these seals in position relative to the distribution chamber 30. Recesses 48 may be any shape and may take the shape of the exterior shape of inner seal 46 and outer seal 44. In the disclosed embodiment, recesses 48 are circular in shape and have approximately rectangular cross-sectional shapes complementary to the shapes of the seal portions accommodated therein. The outer extent of the seals in the disclosed embodiment have a generally Y-shaped cross-section as shown in Figure 7.

Outlet port seals 40, outer seal 44 and inner seal 46 may have numerous configurations. In one embodiment, outlet port seals 40 may have a generally toroidal shape, as shown in Figure 7, which is referred to as a Y-shaped cross-section. Figure 7 is an enlarged detail of outer seal 44. However, outlet port seals 40, outer seal 44 and inner seal 46 may have an identical cross-section to the shape shown in Figure 7. Seals 40, 44, and 46 are not limited to this design. Rather, seals 40, 44, and 46 may have circular, rectangular, s quare, polygonal or other shaped c ross-sections. Seals 40, 44 and 46 are composed of wear resistant materials such as, but not limited to, rubber, silicone, oil-impregnated plastics, and the like.

Seals 40, 4 4, and 4 6 may also be made of ceramic materials having various shapes. In one embodiment, seals 40, 44, and 46 are circular with flat surfaces that contact rotational disk 20. The flat surfaces of seals 40, 44 and 46 have a polished surface for sealing seals 40, 44, and 46 to rotational disk 20 to prevent a fluid from leaking.

In one embodiment, outlet port seals 40, outer seal 44 and inner seal 46 are positioned within recesses 42 and 48 in the respective first body member 14 and second body member 16, as best shown in Figure 4, so that the forces exerted on the outer seal 44 and inner seal 46 by the rotational disk 20 and first valve body member 14 are approximately equal to the forces exerted on the outlet port seals by the rotational disk and second valve body member 16. This balancing of forces on the outlet port seals 40, the outer seal 44, and the inner seal 46 on opposite sides of the rotational disk will produce substantially equal frictional wear on the surfaces of the seals on each side of the rotational disk 20, so that the seals on one side of the rotational disk are not likely to undergo premature wear relative to the seals on the other side of the rotational disk as would occur if the forces on the seals were uneven. This balancing of forces on the seals thus prevents premature failure or loss of efficiency of the valve due to uneven wear of the seals.

Valve 10 may be used to transfer various fluids as described above. In one embodiment, valve 10 is used to transfer pressurized ambient air used in a conventional airlift system by receiving ambient air at inlet port 28 and using rotational disk 20 to transfer the air flow to one of many different end points within a single system (not shown) coupled to outlet ports 12. Valve 10, configured as shown in the figures and described above, is capable of controlling an airlift system having several individual airlift elements using a flow of ambient air, by directing the air flow to various system elements through particular outlet ports 12. Valve 10 may be operated using a controller to control through which outlet port 12 a fluid is sent. The controller may be a remote control device; a micro-controller, which may or may not be programmable; a computer; or other control device. In addition, the controller may contain a readout display capable of indicating the outlet port 12 with which aperture 22 is aligned. To determine a reference position of the rotational disk and the aperture 22 on that disk, the stepper motor 56 is operated until the sensor 70 detects the sensing element 60, thereby sensing a predetermined home position of the rotational disk. Thereafter, to align the aperture 22 with any selected outlet port 12, the stepper motor is commanded to move the predetermined number of steps required to position the disk with the aperture aligned with that selected outlet port.

Although the disclosed embodiment of the invention has been described in the context of receiving fluid flow from a single source and distributing that fluid to one or more alternative destinations, it should be apparent that a valve according to the present invention can also be connected and operated to receive fluid flows from multiple sources connected to corresponding ports 12 (functioning as inlet ports) and select one such fluid for distribution to the common port 28 (functioning as an outlet port). It should also be understood that the valve can also be adapted to operate with liquid flows, although parameters such as different operating pressures and possible corrosive effects of the liquids may affect the design of seals or other elements making up the valve.

The foregoing is provided for purposes of illustrating, explaining, and describing embodiments of this invention. Modifications and adaptations to these embodiments will be apparent to those skilled in the art and may be made without departing from the scope of this invention as defined by the following claims.

## Claims

1. A valve, comprising:
a valve body comprising a first valve body member (14) coupled to a second valve body member (16) to form an internal cavity (18), the first valve body member (14) comprising a distribution chamber (30) in fluid communication with an inlet port (28) for receiving the fluid and for distributing the fluid to one of a plurality of outlet ports (12) located in the second valve body member (16); and the second valve body member (16) comprising a plurality of outlet ports (12);
a rotational disk (20) positioned in the internal cavity (18) inside the valve body between the inlet port (28) and the plurality of outlet ports (12) for directing the fluid from the distribution chamber (30) to an outlet port (12);
an inner seal (46) and an outer seal (44) positioned between the rotational disk (20) and the first valve body member (14) for sealing the rotational disk (20) to the first valve body member (14); and
at least one outlet port seal (40) positioned between the rotational disk (20) and the second valve body member (16),
**characterized** inthat
the rotational disk (20) is rotatable by a drive shaft (52) along its longitudinal axis,
wherein the faces of the rotational disk have a smooth finish, and wherein
the inner and outer seals (46;44) and the at least one outlet port seal (40) are positioned within recesses (48;42) in the respective first valve body member (14) and second valve body member (16), and wherein the recesses (48;42) are sized so that the forces exerted on the inner and outer seals (46;44) by one side of the rotational disk (20) and the first valve body member (14) are approximately equal to the forces exerted on the at least outlet port seal (40) by the other side of the rotational disk (20) and the second valve body member (16).

2. The valve as set forth in claim 1, further **characterized by** a housing for protecting the first valve body member (14) and the second valve body member (16).

3. The valve as set forth in claim 1, further **characterized by** a motor (56) for rotating the rotational disk (20).

4. The valve as set forth in claim 3, **characterized in that** the motor (56) is a stepper motor.

5. The valve as set forth in claim 1, **characterized in that** the outer seal (44) positioned between the rotational disk (20) and the first valve body member (14) comprises an o-ring.

6. The valve as set forth in claim 1, **characterized in that** the outer seal (44) positioned between the rotational disk (20) and the first valve body member (14) comprises a Y-shaped cross-section.

7. The valve as set forth in claim 1, **characterized in that** the at least one outlet port seal (40) comprises an o-ring.

8. The valve as set forth in claim 1, **characterized in that** the at least one outlet port seal (40) comprises a Y-shaped cross-section.

9. The valve as set forth in claim 1, **characterized in that** each outlet port (12) in the second valve body member (16) is surrounded by a recess (42) of the recesses (42) in the second valve body member.

10. The valve as set forth in claim 1, **characterized in that** the outlet ports (12) of the second valve body member (16) are positioned equidistant from a point on the second valve body member (16).

11. The valve as set forth in claim 1, **characterized in that** the outlet port seal (40) positioned between the rotational disk (20) and the second valve body member (16) comprises a plurality of seals for sealing each outlet port (12) individually.

12. The valve as set forth in claim 1, **characterized in that** the outlet port seal (40) positioned between the rotational disk (20) and the second valve body member (16) comprises a plurality of generally circular seals for sealing each outlet port (12) individually.

13. The valve as set forth in claim 1, **characterized in that** the rotational disk (20) further comprises at least one aperture (22) through which the fluid may flow from a top surface (24) of the rotational disk (20) to a bottom surface (26) of the rotational disk (20).

14. The valve as set forth in claim 13, further **characterized by** a sensor for positioning the at least one aperture (20) so that a fluid may flow from the first valve body member (14), through the rotational disk (20), and into at least one outlet port (12).

15. The valve as set forth in claim 14, **characterized in that** the sensor comprises a hall effect sensor.

16. The valve as set forth in claim 1, **characterized in that** the outlet ports (12) of the second valve body member (16) are capable of being coupled with a conduit.

17. The valve as set forth in claim 1, **characterized in that** the distribution chamber (30) comprises a toroidal shape.

18. The valve as set forth in Claim 1, **characterized in that**:
the inner seal (46) positioned between the rotational disk (20) and the first valve body member (14) for sealing the rotational disk (20) to the first valve body member (14) has an outside diameter less than an inside diameter of the distribution chamber (30), and the outer seal (44) positioned between the rotational disk (20) and the first valve body member (14) for sealing the rotational disk (20) to the first valve body member (14), has an inside diameter greater than an outside diameter of the distribution chamber (30).

19. The valve as set forth in claim 18, **characterized in that** the inner seal (46) comprises a Y-shaped cross-section.

20. The valve as set forth in claim 18, **characterized in that** the outer seal (44) comprises a Y-shaped cross-section.

21. The valve as set forth in claim 18, **characterized in that** the at least one outlet port seal (40) comprises a Y-shaped cross-section.

## Patentansprüche

1. Ventil, umfassend:
einen Ventilkörper, umfassend ein erstes Ventilkörperglied (14), das an ein zweites Ventilkörperglied (16) angeschlossen ist, um einen Innenhohlraum (18) zu bilden, wobei das erste Ventilkörperglied (14) eine Verteilungskammer (30) in Fluidverbindung mit einem Einlassanschluss (28) zum Aufnehmen des Fluids und zum Verteilen das Fluids zu einem von mehreren Auslassanschlüssen (12), die sich im zweiten Ventilkörperglied (16) befinden, umfasst und das zweite Ventilkörperglied (16) mehrere Auslassanschlüsse (12) umfasst,
eine Drehscheibe (20), die in dem Innenhohlraum (18) im Ventilkörper zwischen dem Einlassanschluss (28) und den mehreren Auslassanschlüssen (12) angeordnet ist, zum Leiten des Fluids von der Verteilungskammer (30) zu einem Auslassanschluss (12),
eine Innendichtung (46) und eine Außendichtung (44), die zwischen der Drehscheibe (20) und dem ersten Ventilkörperglied (14) angeordnet sind, zum Abdichten der Drehscheibe (20) zum ersten Ventilkörperglied (14) hin, und mindestens eine Auslassanschlussdichtung (40), die zwischen der Drehscheibe (20) und dem zweiten Ventilkörperglied (16) angeordnet ist,
**dadurch gekennzeichnet, dass**
die Drehscheibe (20) durch eine Antriebswelle (52) entlang ihrer Längachse drehbar ist, wobei die Flächen der Drehscheibe eine glatte Oberflächenbeschaffenheit aufweisen und wobei die Innen- und die Außendichtungen (46, 44) und die mindestens eine Auslassanschlussdichtung (40) in Vertiefungen (48, 42) im ersten Ventilkörperglied (14) beziehungsweise im zweiten Ventilkörperglied (16) angeordnet sind und wobei die Vertiefungen (48, 42) derart bemessen sind,
dass die Kräfte, die von einer Seite der Drehscheibe (20) und dem ersten Ventilkörperglied (14) auf die Innen- und die Außendichtungen (46, 44) ausgeübt werden, ungefähr gleich den Kräften sind, die von der anderen Seite der Drehscheibe (20) und dem zweiten Ventilkörperglied (16) auf die mindestens eine Auslassanschlussdichtung (40) ausgeübt werden.

2. Ventil nach Anspruch 1, ferner **gekennzeichnet durch** ein Gehäuse zum Schützen des ersten Ventilkörpergliedes (14) und des zweiten Ventilkörpergliedes (16).

3. Ventil nach Anspruch 1, ferner **gekennzeichnet durch** einen Motor (56) zum Drehen der Drehscheibe (20) gekennzeichnet.

4. Ventil nach Anspruch 3, **dadurch gekennzeichnet, dass** der Motor (56) ein Schrittmotor ist.

5. Ventil nach Anspruch 1, **dadurch gekennzeichnet, dass** die Außendichtung (44), die zwischen der Drehscheibe (20) und dem ersten Ventilkörperglied (14) angeordnet ist, einen O-Ring umfasst.

6. Ventil nach Anspruch 1, **dadurch gekennzeichnet, dass** die Außendichtung (44), die zwischen der Drehscheibe (20) und dem ersten Ventilkörperglied (14) angeordnet ist, einen Y-förmigen Querschnitt umfasst.

7. Ventil nach Anspruch 1, **dadurch gekennzeichnet, dass** die mindestens eine Auslassanschlussdichtung (40) einen O-Ring umfasst.

8. Ventil nach Anspruch 1, **dadurch gekennzeichnet, dass** die mindestens eine Auslassanschlussdichtung (40) einen Y-förmigen Querschnitt umfasst.

9. Ventil nach Anspruch 1, **dadurch gekennzeichnet, dass** jeder Auslassanschluss (12) in dem zweiten Ventilkörperglied (16) von einer Vertiefung (42) der Vertiefungen (42) in dem zweiten Ventilkörperglied umgeben ist.

10. Ventil nach Anspruch 1, **dadurch gekennzeichnet, dass** die Auslassanschlüsse (12) des zweiten Ventilkörpergliedes (16) mit gleichen Abständen von einem Punkt an dem zweiten Ventilkörperglied (16) angeordnet sind.

11. Ventil nach Anspruch 1, **dadurch gekennzeichnet, dass** die Auslassanschlussdichtung (40), die zwischen der Drehscheibe (20) und dem zweiten Ventilkörperglied (16) angeordnet ist, mehrere Dichtungen zum einzelnen Abdichten jedes Auslassanschlusses (12) umfasst.

12. Ventil nach Anspruch 1, **dadurch gekennzeichnet, dass** die Auslassanschlussdichtung (40), die zwischen der Drehscheibe (20) und dem zweiten Ventilkörperglied (16) angeordnet ist, mehrere im Allgemeinen kreisrunde Dichtungen zum einzelnen Abdichten jedes Auslassanschlusses (12) umfasst.

13. Ventil nach Anspruch 1, **dadurch gekennzeichnet, dass** die Drehscheibe (20) ferner mindestens eine Öffnung (22) umfasst, durch die das Fluid von einer Oberseite (24) der Drehscheibe (20) zu einer Unterseite der Drehscheibe (20) strömen kann.

14. Ventil nach Anspruch 13, ferner **gekennzeichnet durch** einen Sensor, zum Anordnen der mindestens einen Öffnung (20) derart, dass ein Fluid vom ersten Ventilkörperglied (14) **durch** die Drehscheibe (20) und in mindestens einen Auslassanschluss (12) strömen kann.

15. Ventil nach Anspruch 14, **dadurch gekennzeichnet, dass** der Sensor einen Hall-Effekt-Sensor umfasst.

16. Ventil nach Anspruch 1, **dadurch gekennzeichnet, dass** die Auslassanschlüsse (12) des zweiten Ventilkörpergliedes (16) an eine Leitung angeschlossen werden können.

17. Ventil nach Anspruch 1, **dadurch gekennzeichnet, dass** die Verteilungskammer (30) eine Torusform umfasst.

18. Ventil nach Anspruch 1, **dadurch gekennzeichnet, dass**:
die Innendichtung (46) zum Abdichten der Drehscheibe (20) zum ersten Ventilkörperglied (14) hin, die zwischen der Drehscheibe (20) und dem ersten Ventilkörperglied (14) angeordnet ist, einen Außendurchmesser aufweist, der kleiner ist als ein Innendurchmesser der Verteilungskammer (30), und die Außendichtung (44) zum Abdichten der Drehscheibe (20) zum ersten Ventilkörperglied (14) hin, die zwischen der Drehscheibe (20) und dem ersten Ventilkörperglied (14) angeordnet ist, einen Innendurchmesser aufweist, der größer ist als ein Außendurchmesser der Verteilungskammer (30).

19. Ventil nach Anspruch 18, **dadurch gekennzeichnet, dass** die Innendichtung (46) einen Y-förmigen Querschnitt umfasst.

20. Ventil nach Anspruch 18, **dadurch gekennzeichnet, dass** die Außendichtung (44) einen Y-förmigen Querschnitt umfasst.

21. Ventil nach Anspruch 18, **dadurch gekennzeichnet, dass** die mindestens eine Auslassanschlussdichtung (40) einen Y-förmigen Querschnitt umfasst.

## Revendications

1. Clapet comprenant:
un corps de clapet comprenant un premier élément de corps de clapet (14) couplé à un second élément de corps de clapet (16) afin de former une cavité interne (18), le premier élément de corps de clapet (14) comprenant une chambre de distribution (30) en communication de fluide avec un orifice d'entrée (28) pour recevoir le fluide et pour distribuer le fluide à l'un d'une pluralité d'orifices de sortie (12) positionnés dans le second élément de corps de clapet (16); et le second élément de corps de clapet (16) comprenant une pluralité d'orifices de sortie (12);
un disque de rotation (20) positionné dans la cavité interne (18) à l'intérieur du corps de clapet entre l'orifice d'entrée (28) et la pluralité d'orifices de sortie (12) pour diriger le fluide de la chambre de distribution (30) vers un orifice de sortie (12);
un joint d'étanchéité interne (46) et un joint d'étanchéité externe (44) positionnés entre le disque de rotation (20) et le premier élément de corps de clapet (14) pour rendre étanche le disque de rotation (20) par rapport au premier élément de corps de clapet (14); et
au moins un joint d'étanchéité d'orifice de sortie (40) positionné entre le disque de rotation (20) et le second élément de corps de clapet (16),
**caractérisé en ce que** :
le disque de rotation (20) peut être entraîné en rotation par un arbre d'entraînement (52) le long de son axe longitudinal,
dans lequel les faces du disque de rotation ont une finition lisse et dans lequel:
les joints d'étanchéité interne et externe (46; 44) et le au moins un joint d'étanchéité d'orifice de sortie (40) sont positionnés à l'intérieur d'évidements (48; 42) dans le premier élément de corps de clapet (14) et le second élément de corps de clapet (16) respectifs, et dans lequel les évidements (48; 42) sont dimensionnés de sorte que les forces exercées sur les joints d'étanchéité interne et externe (46; 44) par un côté du disque de rotation (20) et le premier élément de corps de clapet (14) sont approximativement égales aux forces exercées sur le au moins un joint d'étanchéité d'orifice de sortie (40) par l'autre côté du disque de rotation (20) et le second élément de corps de clapet (16).

2. Clapet selon la revendication 1, **caractérisé en outre par** un boîtier pour protéger le premier élément de corps de clapet (14) et le second élément de corps de clapet (16).

3. Clapet selon la revendication 1, **caractérisé en outre par** un moteur (56) pour faire tourner le disque de rotation (20).

4. Clapet selon la revendication 3, **caractérisé en ce que** le moteur (56) est un moteur pas à pas.

5. Clapet selon la revendication 1, caractérisé en ce le joint d'étanchéité externe (44) positionné entre le disque de rotation (20) et le premier élément de corps de clapet (14) comprend un joint torique.

6. Clapet selon la revendication 1, **caractérisé en ce que** le joint d'étanchéité externe (44) positionné entre le disque de rotation (20) et le premier élément de corps de clapet (14) comprend une section transversale en forme de Y.

7. Clapet selon la revendication 1, **caractérisé en ce que** le au moins joint d'étanchéité d'orifice de sortie (40) comprend un joint torique.

8. Clapet selon la revendication 1, **caractérisé en ce que** le au moins un joint d'étanchéité d'orifice de sortie (40) comprend une section transversale en forme de Y.

9. Clapet selon la revendication 1, **caractérisé en ce que** chaque orifice de sortie (12) dans le second élément de corps de clapet (16) est entouré par un évidement (42) des évidements (42) dans le second élément de corps de clapet.

10. Clapet selon la revendication 1, **caractérisé en ce que** les orifices de sortie (12) du second élément de corps de clapet (16) sont positionnés à équidistance d'un point sur le second élément de corps de clapet (16).

11. Clapet selon la revendication 1, **caractérisé en ce que** le joint d'étanchéité d'orifice de sortie (40) positionné entre le disque de rotation (20) et le second élément de corps de clapet (16) comprend une pluralité de joints d'étanchéité pour réaliser l'étanchéité de chaque orifice de sortie (12) individuellement.

12. Clapet selon la revendication 1, **caractérisé en ce que** le joint d'étanchéité d'orifice de sortie (40) positionné entre le disque de rotation (20) et le second élément de corps de clapet (16) comprend une pluralité de joints d'étanchéité généralement circulaires pour réaliser l'étanchéité de chaque orifice de sortie (12) individuellement.

13. Clapet selon la revendication 1, **caractérisé en ce que** le disque de rotation (20) comprend en outre au moins une ouverture (22) à travers laquelle le fluide peut s'écouler à partir d'une surface supérieure (24) du disque de rotation (20) jusqu'à une surface inférieure (26) du disque de rotation (20).

14. Clapet selon la revendication 13, **caractérisé en outre par** un capteur pour positionner la au moins une ouverture (20) de sorte qu'un fluide peut s'écouler à partir du premier élément de corps de clapet (14), en passant par le disque de rotation (20) et dans le au moins un orifice de sortie (12).

15. Clapet selon la revendication 14, **caractérisé en ce que** le capteur comprend un capteur à effet Hall.

16. Clapet selon la revendication 1, **caractérisé en ce que** les orifices de sortie (12) du second élément de corps de clapet (16) peuvent être couplés avec un conduit.

17. Clapet selon la revendication 1, **caractérisé en ce que** la chambre de distribution (30) comprend une forme toroïdale.

18. Clapet selon la revendication 1, **caractérisé en ce que**:
le joint d'étanchéité interne (46) positionné entre le disque de rotation (20) et le premier élément de corps de clapet (14) pour réaliser l'étanchéité du disque de rotation (20) par rapport au premier élément de corps de clapet (14) a un diamètre extérieur inférieur à un diamètre intérieur de la chambre de distribution (30), et le joint d'étanchéité externe (44) positionné entre le disque de rotation (20) et le premier élément de corps de clapet (14) pour réaliser l'étanchéité du disque de rotation (20) par rapport au premier élément de corps de clapet (14), a un diamètre intérieur supérieur à un diamètre extérieur de la chambre de distribution (30).

19. Clapet selon la revendication 18, **caractérisé en ce que** le joint d'étanchéité interne (46) comprend une section transversale en forme de Y.

20. Clapet selon la revendication 18, **caractérisé en ce que** le joint d'étanchéité externe (44) comprend une section transversale en forme de Y.

21. Clapet selon la revendication 18, **caractérisé en ce que** le au moins un joint d'étanchéité d'orifice de sortie (40) comprend une section transversale en forme de Y.
